# EUROPÄISCHE PATENTSCHRIFT

(11) **EP 2 357 144 B1**
(45) Veröffentlichungstag und Bekanntmachung des Hinweises auf die Patenterteilung: **25.02.2015**
(21) Anmeldenummer: 11151116.8
(22) Anmeldetag: 17.01.2011
(51) Int. Cl.: B65G 43/10, B65G 47/26

(54) **Vorrichtung zum Fördern und/oder Stauen von Artikeln**
Apparatus for conveying and/or accumulating items
Dispositif pour transporter et/ou accumuler des articles

(30) Priorität: 17.02.2010 DE 102010002039
(43) Veröffentlichungstag der Anmeldung: 17.08.2011
(73) Patentinhaber: Krones AG, 93073 Neutraubling (DE)
(72) Erfinder: Eckert, Laura, 93197 Zeitlarn (DE)
(74) Vertreter: Grünecker, Kinkeldey, Stockmair & Schwanhäusser

(56) Entgegenhaltungen:
- EP-A2- 0 095 859
- US-A- 3 840 110
- US-A- 5 083 655
- US-A1- 2007 119 690
- US-A1- 2009 266 678
- US-B1- 6 193 054

## Beschreibung

Die vorliegende Erfindung betrifft eine Vorrichtung zum Fördern und/oder Stauen von Artikeln, insbesondere von Gebinden, entlang einer Förderstrecke.

Insbesondere in der Getränkeindustrie werden häufig sogenannte Stauförderer verwendet, welche mehrere Förderelemente entlang einer Förderstrecke umfassen. Jedes dieser Förderelemente weist üblicherweise einen eigenen Antrieb auf. Durch diesen eigenen Antrieb ist es möglich, jedes einzelne Förderelement unabhängig von den anderen anzutreiben. Dadurch kann ein auf einem Förderelement angeordnetes Fördergut entweder bewegt (gefördert) oder angehalten (gestaut) werden.

Möglich ist eine Ausbildung des Förderers als Rollenförderer. Bei einem Rollenförderer können einzelne Rollen oder Segmente von Rollen im Rahmen ihrer Freiheitsgrade beliebig angetrieben und gebremst werden. Bei stark unterschiedlicher Geometrie und Gewicht der zu fördernden Artikel, bei hohen Fördergeschwindigkeiten und/oder bei leisem Transport ist jedoch der Einsatz der Gurtfördertechnik der Rollenfördertechnik vorzuziehen.

Die bekannten Gurtförderer haben für das Fördern und/oder Stauen jedoch den Nachteil, dass sie eine hohe Anzahl an Antrieben, einen aufwendigen elektrischen Anschluss, eine zeitintensive Inbetriebnahme und einen großen Aufwand aus Sicht der Steuerungstechnik erfordern.

Eine Vorrichtung zum Fördern und Stauen von Artikeln ist aus der US 2007/0119690 bekannt. Dort können mehrere Gurtförderer über einen Antriebsgurt angetrieben werden. Mittels einer elektromagnetischen Kupplung kann für einen Gurtförderer wahlweise eine Antriebsverbindung mit dem Antriebsgurt hergestellt werden, sodass der Gurtförderer in Bewegung versetzt wird, oder eine solche Antriebsverbindung wieder gelöst werden. Nach dem Lösen der Antriebsverbindung stoppt der Gurtförderer nicht abrupt, sondern läuft langsam aus. Damit ist es schwieriger, eine entsprechend exakte Positionierung der geförderten Artikel zu erreichen.

Daher ist es Aufgabe der vorliegenden Erfindung, eine verbesserte Vorrichtung zum Fördern und/oder Stauen von Artikeln bereitzustellen. Diese Aufgabe wird durch eine Vorrichtung gemäß Anspruch 1 gelöst. Vorteilhafte Weiterbildungen finden sich in den Unteransprüchen.

Dadurch, dass nicht jedes der Förderelemente einen eigenen Antrieb aufweist, sondern die wenigstens zwei Förderelemente durch einen Antrieb antreibbar sind, weist eine oben beschriebene Vorrichtung einen vereinfachten Aufbau im Vergleich zu bekannten Vorrichtungen auf. Gleichzeitig erlaubt die Bremsfunktion der Kupplung eine möglichst exakte Positionierung des Fördergutes beim Fördern und/oder Stauen.

Es kann notwendig sein, einen Artikel temporär also für eine vorherbestimmte Zeit, anzuhalten. In diesem Fall spricht man vom "Stauen" eines Artikels. Ansonsten kann der Artikel entlang der Förderstrecke bewegt werden. In diesem Fall spricht man vom "Fördern" eines Artikels.

Der zu fördernde oder zu stauende Artikel kann ein Getränkeartikel oder ein Lebensmittelartikel sein. Der Artikel kann auch einem Gebinde entsprechen. Ein Gebinde kann die Gesamtheit aus Packgut und Verpackung bezeichnen. Insbesondere kann ein Gebinde eines Getränkeartikels einem Getränk und der zugehörigen Verpackung entsprechen. Ein Gebinde kann auch einem Großgebinde entsprechen, wobei ein Großgebinde eine Mehrzahl von Einzelgebinden umfasst. Beispielsweise kann es sich bei einem Gebinde um eine Getränkekiste mit Flaschen, die mit einem Getränk gefüllt sind, handeln. Ein Gebinde kann auch ein Karton oder ein Shrink Pack sein. Die Gebinde können Gebinde eines oder mehrerer Getränkeartikel und/oder Lebensmittel, Handelsprodukte und/oder Behälter und/oder Pakete im Allgemeinen sein.

Die Förderstrecke kann insbesondere eine Strecke sein, entlang derer ein Artikel, insbesondere ein Gebinde, gefördert werden soll. Die Förderstrecke kann wenigstens zwei Förderelemente umfassen, insbesondere wobei die Förderelemente so angeordnet und/oder ausgebildet sind, dass ein Artikel, also ein Fördergut, mittels der Förderelemente entlang der Förderstrecke bewegt werden kann. Mit anderen Worten kann die Förderstrecke in Förderelemente oder Fördersegmente unterteilt sein.

Die Förderelemente können in einer Reihe angeordnet sein, insbesondere wobei jedes der Förderelemente dieselbe Förderrichtung aufweist. Die Förderelemente oder Fördersegmente können insbesondere unmittelbar hintereinander angeordnet sein.

Die Förderelemente oder Fördersegmente können als Gurtförderer ausgebildet sein. Bei einem Gurtförderer wird ein endloses Band oder Gurt über wenigstens zwei Umlenkrollen getrieben. An Stelle des Gurtes kann auch eine Gliedermatte oder ein anderes, dem Gurt in der Wirkweise ähnliches, endloses Förderband verwendet werden.

Der Antrieb kann ein Motor, insbesondere ein Elektromotor, sein. Der Antrieb kann so ausgebildet sein, dass er eine ausreichende Antriebskraft bereitstellt, um die wenigstens zwei Förderelemente gleichzeitig anzutreiben.

Die Vorrichtung umfasst außerdem ein Übertragungselement zum Übertragen einer Antriebskraft vom Antrieb an die Förderelemente. Das Übertragungselement kann insbesondere einen Riemen, eine Kette und/oder eine Welle umfassen. Für einen einfachen Aufbau ist ein Riemen besonders vorteilhaft. Das Übertragungselement kann auch mehrere Riemen, Ketten und/oder Wellen umfassen.

Jedes der wenigstens zwei Förderelemente ist über eine Kupplung mit dem Übertragungselement verbindbar. Mit anderen Worten weist die Vorrichtung für jedes Förderelement eine Kupplung auf, über welche das Förderelement mit dem Übertragungselement verbunden werden kann. Über das Übertragungselement und die Kupplung kann die Antriebskraft des Antriebs an das Förderelement weitergeleitet werden, und somit das Förderelement in Bewegung gesetzt werden. Die Kupplung kann auch verwendet werden, um ein Förderelement vom Übertragungselement abzukoppeln. In diesem Fall wird das Förderelement nicht angetrieben. Dies ermöglicht ein Stauen (Anhalten) eines auf dem Förderelement befindlichen Fördergutes.

Die Vorrichtung kann insbesondere so ausgebildet sein, dass jedes der wenigstens zwei Förderelemente über die Kupplung mit dem Übertragungselement verbunden oder vom Übertragungselement getrennt werden kann, wobei die wenigstens zwei Förderelemente dabei ortsfest bleiben. Die Förderelemente müssen also nicht in ihrer relativen Lage zueinander verändert werden, um sie mit dem Übertragungselement zu verbinden oder sie vom Übertragungselement zu trennen. Dadurch ist die Vorrichtung kompakt also platzsparend ausführbar.

Die Kupplung eines Förderelements kann mit einer der Umlenkrollen des Förderelementes verbunden sein. Dadurch kann die Umlenkrolle als Antriebsrolle ausgebildet werden.

Die Kupplung kann insbesondere eine Magnetpulverkupplung oder eine Elektromagnetkupplung sein.

Die Kupplung ist als Kupplungsbremskombination mit einer Bremsfunktion kombiniert.

Die Vorrichtung umfasst außerdem ein Steuerungselement zum Steuern des Ein- und/oder Auskuppelns der Förderelemente.

Insbesondere können alle Förderelemente der Förderstrecke durch den Antrieb, insbesondere unabhängig voneinander, angetrieben werden. Mit anderen Worten kann der Antrieb ein Zentralantrieb sein, der es erlaubt, die einzelnen Förderelemente über das Übertragungselement anzutreiben. Über eine Kupplung kann jedes einzelne Förderelement mit dem Übertragungselement verbunden werden und damit auf den Zentralantrieb geschaltet werden, oder wieder von ihm getrennt werden.

Die Vorrichtung kann auch wenigstens vier Förderelemente umfassen, wobei der Antrieb ein erster Antrieb ist, und wobei die Vorrichtung außerdem einen zweiten Antrieb umfasst, wobei wenigstens zwei Förderelemente durch den ersten Antrieb, insbesondere unabhängig voneinander, antreibbar sind und wenigstens zwei Förderelemente durch den zweiten Antrieb, insbesondere unabhängig voneinander, antreibbar sind. Insbesondere bei längeren Einheiten, beispielsweise bei Vorrichtungen mit vier oder mehr Förderelementen, kann die Belastung für ein Übertragungselement, beispielsweise für einen Riemen, zu groß werden. Durch das Vorsehen von zwei Antrieben kann die Belastung halbiert werden.

Beispielsweise können die Förderelemente abwechselnd oder alternierend dem ersten oder dem zweiten Antrieb zugeordnet sein.

Weitere Merkmale und Vorteile werden nachfolgend anhand der beispielhaften Figuren erläutert. Dabei zeigt
- Figur 1: eine Illustration einer beispielhaften Vorrichtung zum Fördern und/oder Stauen von Artikeln;
- Figur 2: eine Illustration einer zweiten beispielhaften Vorrichtung zum Fördern und/oder Stauen von Artikeln; und
- Figur 3: eine Illustration einer dritten beispielhaften Vorrichtung zum Fördern und/oder Stauen von Artikeln.

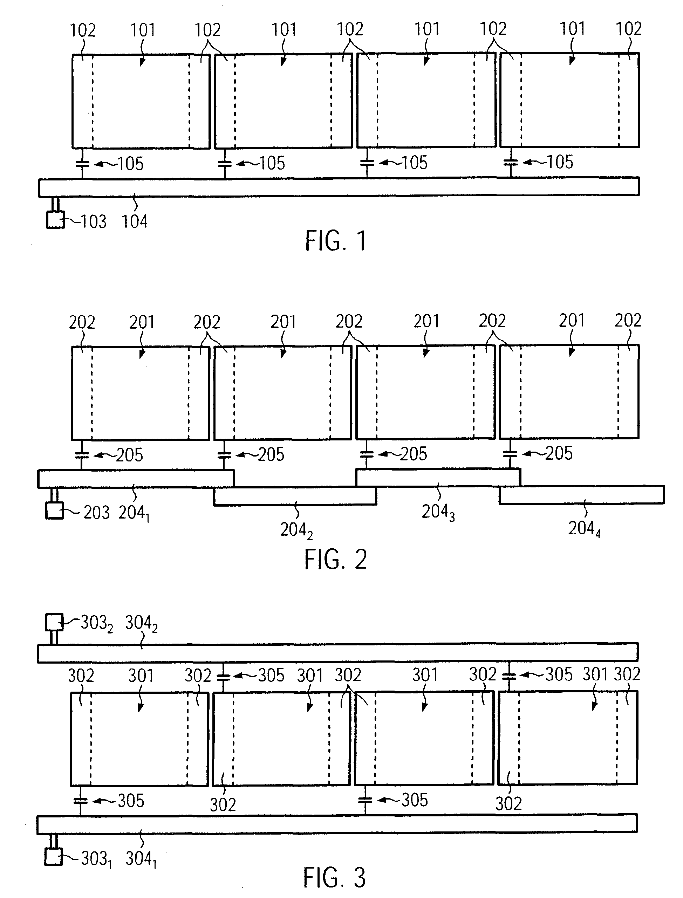

In Figur 1 sind vier in einer Reihe angeordnete Förderelemente gezeigt. Diese vier beispielhaften Förderelemente entsprechen einem Teil einer Förderstrecke. Jedes der Förderelemente ist als Gurtstauförderer ausgebildet. Mit anderen Worten umfasst jedes der Förderelemente einen endlosen Gurt 101, der über Umlenkrollen 102 bewegt werden kann.

Figur 1 zeigt außerdem einen Motor 103, der als Antrieb für die Förderelemente ausgebildet ist. Insbesondere ist der Motor 103 mit einem Riemen 104 verbunden, der die Antriebskraft an die Förderelemente überträgt. Für jedes der Förderelemente ist eine Kupplung 105 vorgesehen, die unabhängig voneinander mit dem Riemen 104 verbunden werden können beziehungsweise wieder vom Riemen 104 getrennt werden können. Befindet sich der Riemen 104 in Bewegung, so können die Förderelemente, insbesondere die eine als Antriebsrolle ausgebildete Umlenkrolle 102 über die Kupplung 105 angetrieben beziehungsweise angehalten werden. Damit kann auch ein auf einem Gurt 101 befindliches Fördergut entweder bewegt (gefördert) beziehungsweise angehalten (gestaut) werden.

Eine in einem übergeordneten Steuerungselement implementierte Steuerlogik kann das Ein- und Auskuppeln der Förderelemente steuern. Als übergeordnetes Steuerelement kann sowohl ein Steuerelement verstanden werden, das mehrere Förderelemente oder Gruppierungen von Förderelementen oder ein Fördersystem zentral steuert aber auch eine Steuereinheit, die ein einzelnes Förderelement anhand der Zustände benachbarter Förderelemente aus einer Systemsicht dezentral steuert.

Dadurch, dass ein Motor 103 vorgesehen ist, kann der Aufwand an Material und Steuerungstechnik gegenüber bekannten Systemen, bei denen jedes der Förderelemente einen eigenen Motor aufweist, reduziert werden. Dies kann sich sowohl auf die Kosten als auch auf die Umweltverträglichkeit eines solchen Systems positiv auswirken.

Figur 2 zeigt ein anderes Beispiel für eine Vorrichtung zum Fördern und/oder Stauen von Artikeln. Die in Figur 2 gezeigte Vorrichtung umfasst dabei, wie das Beispiel aus Figur 1, vier unabhängig voneinander antreibbare Förderelemente, wobei jedes der Förderelemente einen Gurt 201 und zwei Umlenkrollen 202 umfasst. Außerdem zeigt die Figur 2 einen Motor 203, der mit einem Übertragungselement verbunden ist. Im Gegensatz zum Übertragungselement aus Figur 1 umfasst das Übertragungselement der Figur 2 vier Riemen 204₁, 204₂, 204₃ und 204₄. Zwei der Riemen 204₁ und 204₃ können über Kupplungen 205 mit den Förderelementen verbunden werden. Die Riemen 204₂ und 204₄ sind mit dem Riemen 204₁ beziehungsweise 204₃ verbunden. Ein derartiger Aufbau kann aufgrund der Verwendbarkeit kürzerer Riemen mit Kraftübertragung über eine Welle von Vorteil sein.

Figur 3 zeigt eine weitere beispielhafte Vorrichtung zum Fördern und/oder Stauen von Artikeln. Die Vorrichtung umfasst vier Förderelemente, von denen jedes einen Gurt 301 und Umlenkrollen 302 umfasst. Jeweils eine der Umlenkrollen 302 dient als Antriebsrolle und ist über eine Kupplung 305 mit einem Übertragungselement 304₁ beziehungsweise 304₂ verbindbar. Im Gegensatz zu den zuvor gezeigten Beispielen sind in dem in Figur 3 illustrierten Beispiel zwei Motoren 303₁ und 303₂ vorgesehen, von denen jeweils zwei Förderelemente über je einen Riemen 304₁ beziehungsweise 304₂ und über die Kupplungen 305 unabhängig voneinander angetrieben werden können. Die Förderelemente sind insbesondere abwechselnd entweder mit dem ersten Riemen 304₁ oder mit dem zweiten Riemen 304₂ verbunden. Durch das Vorsehen von zwei Antrieben kann die Belastung auf zwei Riemen und/oder zwei Motoren aufgeteilt werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind. Insbesondere kann die Vorrichtung zum Fördern und/oder Stauen von Gebinden der Getränkeindustrie oder auch zum Verpackungstransport von Konsumgütern oder in Distributionszentren von Versandhäusern verwendet werden.

## Patentansprüche

1. Vorrichtung zum Fördern und/oder Stauen von Artikeln, insbesondere von Gebinden, entlang einer Förderstrecke, umfassend:
wenigstens zwei Förderelemente, wobei die Förderelemente als Endlosförderer, insbesondere als Gurtförderer, ausgebildet sind;
einen Antrieb (103; 203; 303), wobei die wenigstens zwei Förderelemente durch den Antrieb (103; 203; 303), insbesondere unabhängig voneinander, antreibbar sind,
ein Übertragungselement zum Übertragen einer Antriebskraft vom Antrieb an die Förderelemente, und
ein Steuerungselement zum Steuern des Ein- und/oder Auskuppelns der Förderelemente,
wobei jedes der wenigstens zwei Förderelemente über eine Kupplung (105; 205; 305) mit dem Übertragungselement verbindbar ist,
wobei die Kupplung (105; 205; 305) als Kupplungsbremskombination mit einer Bremsfunktion kombiniert ist; und
wobei die Vorrichtung so ausgebildet ist, dass mit der Bremsfunktion eine Positionierung des Förderguts beim Fördern und/oder Stauen steuerbar ist.

2. Vorrichtung nach Anspruch 1, wobei das Übertragungselement einen Riemen (104; 204; 304), eine Kette und/oder eine Welle umfasst.

3. Vorrichtung nach einem der Ansprüche 1 oder 2, wobei die Kupplung (105; 205; 305) eine Magnetpulverkupplung oder eine Elektromagnetkupplung ist.

4. Vorrichtung nach einem der vorangegangenen Ansprüche, wobei alle Förderelemente der Förderstrecke durch den Antrieb (103; 203; 303), insbesondere unabhängig voneinander, antreibbar sind.

5. Vorrichtung nach einem der vorangegangenen Ansprüche, umfassend wenigstens vier Förderelemente, wobei der Antrieb ein erster Antrieb (303₁) ist, und wobei die Vorrichtung außerdem umfasst:
einen zweiten Antrieb (303₂), wobei wenigstens zwei Förderelemente durch den ersten Antrieb (303₁), insbesondere unabhängig voneinander, antreibbar sind und wenigstens zwei Förderelemente durch den zweiten Antrieb (303₂), insbesondere unabhängig voneinander, antreibbar sind.

## Claims

1. A device for conveying and/or accumulating articles, particularly packs, along a conveying section, comprising:
at least two conveying elements, the conveying elements being configured as endless conveyors, in particular, as belt conveyors;
a drive (103; 203; 303), wherein the at least two conveying elements being drivable, in particular, independently from each other, by the drive (103; 203; 303);
a transmission element for transmitting a drive power from the drive to the conveying elements,
a control element for controlling the coupling and/or decoupling of the conveying elements,
wherein each of the at least two conveying elements is connectable to the transmission element by a clutch (105; 205; 305),
wherein the clutch (105; 205; 305) is combined as a clutch/brake combination with a brake function, and
wherein the device is configured such that positioning of the conveyed material during conveying and/or accumulating of the same is controllable by the brake function.

2. Device according to claim 1, wherein the transmission element comprises a belt (104; 204; 304), a chain and/or a shaft.

3. Device according to claim 1 or 2, wherein the clutch (105; 205; 305) is one of a magnetic powder clutch or an electromagnetic clutch.

4. Device according to any one of the preceding claims, wherein all of the conveying elements of the conveying section are drivable, in particular, independently of each other, by the drive (103; 203; 303).

5. Device according to any of the preceding claims, comprising at least four conveying elements, wherein the drive is a first drive (303₁), and wherein the device further comprises:
a second drive (303₂) wherein at least two conveying elements are drivable, in particular, independently of each other, by the first drive (303₁), and at least two conveying elements are drivable, in particular, independently of each other, by the second drive (303₂).

## Revendications

1. Dispositif pour le transport et/ou l'accumulation d'articles, notamment de paquets ou d'emballages groupés, le long d'un parcours de transport, comprenant :
au moins deux éléments de transport, les éléments de transport étant réalisés en tant que transporteurs sans fin, notamment en tant que transporteurs à bande ;
un moyen d'entraînement (103; 203; 303), lesdits au moins deux éléments de transports pouvant être entraînés, notamment de manière indépendante les uns des autres, par le moyen d'entraînement (103; 203; 303),
un élément de transmission pour transmettre une force d'entraînement du moyen d'entraînement aux éléments de transport, et
un élément de commande pour commander le couplage ou le découplage des éléments de transport, dispositif
dans lequel chacun desdits au moins deux éléments de transport peut être relié par l'intermédiaire d'un embrayage de couplage (105; 205; 305) à l'élément de transmission,
dans lequel l'embrayage de couplage (105; 205; 305) est combiné à une fonction de freinage en tant que combinaison embrayage-frein ; et
dans lequel la conception du dispositif est prévue pour permettre, à l'aide de la fonction de freinage, un positionnement des produits transportés lors du transport et/ou de l'accumulation.

2. Dispositif selon la revendication 1, dans lequel l'élément de transmission comprend une courroie (104; 204; 304), une chaîne et/ou un arbre.

3. Dispositif selon la revendication 1 ou la revendication 2, dans lequel l'embrayage de couplage (105; 205; 305) est un embrayage à poudre magnétique ou un embrayage électromagnétique.

4. Dispositif selon l'une des revendications précédentes, dans lequel tous les éléments de transport du parcours de transport peuvent être entraînés, notamment de manière indépendante les uns des autres, par le moyen d'entraînement (103; 203; 303).

5. Dispositif selon l'une des revendications précédentes, comprenant au moins quatre éléments de transport, dans lequel le moyen d'entraînement est un premier moyen d'entraînement (303₁), et le dispositif comprenant, en outre :
un deuxième moyen d'entraînement (303₂), au moins deux éléments de transport pouvant être entraînés, notamment indépendamment les uns des autres, par le premier moyen d'entraînement (303₁), et au moins deux éléments de transport pouvant être entraînés, notamment indépendamment les uns des autres, par le deuxième moyen d'entraînement (303₂).
